# EUROPEAN PATENT SPECIFICATION

(11) **EP 1 506 556 B1**
(45) Date of publication and mention of the grant of the patent: **18.07.2007**
(21) Application number: 02727624.5
(22) Date of filing: 22.05.2002
(51) Int. Cl.: H01G 7/02, H04R 19/01

(54) **ELECTRET TRANSDUCER**
ELEKTRETWANDLER
TRANSDUCTEUR A ELECTRET

(43) Date of publication of application: 16.02.2005
(73) Proprietor: Olkkonen, Hannu, 71570 Syväniemi (FI); Heikkinen, Paavo, 70150 Kuopio (FI)
(72) Inventor: Olkkonen, Hannu, 71570 Syväniemi (FI); Heikkinen, Paavo, 70150 Kuopio (FI)
(74) Representative: Pitkänen, Hannu Alpo Antero
(86) International application number: PCT/FI2002/000441
(87) International publication number: WO 2003/102983

(56) References cited:
- US-A- 3 736 436
- US-A- 3 809 828
- US-A- 4 250 415
- US-A- 4 443 711
- US-A- 4 891 843

## Description

The present invention relates to an electret transducer, which has surface layers made of conducting material, between which layers there is electret material and which surface layers include connecting elements for connecting the transducer to a measuring apparatus.

An electret transducer of such kind is known from US-A-3 809 828. An electret microphone is known from US-A-4 891 843.

Electret material refers to material, which may be polarized permanently, which means that a permanent electric field is formed in it. An electret transducer is formed of a film made of electret material by attaching films made of conducting material to both surfaces of the film made of electret material. The function of the electret transducer is based on the ability to produce potential of a thin film-like object made of electret material, which potential depends on pressure difference directed to the surface of the film. The transformation in the electret material creates a change in the electric field of the electret material, which change creates a measurable potential in conducting films. Therefore, the magnitude of static or dynamic stress/transformation directed to the transducer may be defined by measuring the potential between the conducting films.

Electret material may be manufactured of common recognized polymers, such as polypropene by employing usual manufacturing methods employed in plastic industry. Typically, the electret film is thin (thickness less than 0,1 mm) and flexible, due to what the size of a transducer made of it may be chosen quite freely. With electret transducers it is possible to measure a reasonably large interval of changes and frequency band of pressure changes. Therefore, they may be employed in many various measuring applications, such as in various vibration measurements and stressing measurements. In addition, the relatively economical price of electret material makes them extremely competitive in respect of other corresponding transducers and transducer materials.

The problem of present electret transducers is the fact that due to their construction electret transducers have great capacitance in respect of small charge created by transformation. Therefore, a great part of charge is employed in charging capacitance and the potential created between conducting films remains relatively small. Therefore, a present electret transducer is relatively non-sensitive in respect of the change in electric field created in electret material. Especially, in case the transformation produced to a transducer is local, the potential to be measured stays small in respect of the magnitude of transformation, and therefore the measuring of small local transformations/stresses with present electret transducers requires a stable, sensitive and noiseless measuring apparatus. Furthermore, due to relatively great capacitance a present electret transducer collects rather easily capasitively induced electrical disturbance, which limits its usage in such applications in which a transducer is exposed under influence of outer electric fields.

The object of the invention is to provide an electret transducer, with which the earlier mentioned disadvantages are eliminated. In addition, the object of the invention is to provide an electret transducer, which is simple by construction and economical by manufacturing costs.

The object of the invention is accomplished by an electret transducer, the characteristics of which are presented in the claims.

Characteristic to the electret transducer in accordance with the invention is the fact that between electret material and both surface layers have been placed transversally conducting electricity films, which have particles conducting electricity in the direction of thickness of the film. Thus an electret transducer is created, which is essentially more sensitive than earlier electret transducers and even a small outer power creates a remarkable great outer potential, because due to the new transducer construction the capacitance of the transducer will be essentially smaller than in earlier recognized electret transducers. In addition, due to this it is also impossible for capasitive electric disturbances to be induced to the transducer, in which case it is possible with this kind of transducer to measure remarkably more exactly than earlier clearly smaller stresses and transformations than earlier.

In an advantageous application of the invention the layers of the transducer are film-like objects located against one another. In this way the electret transducer may be realized simple by construction and economical by manufacturing costs. In addition, in this way the electret transducer will be thin in which case it may be manufactured very small if desired, and it will be very flexible, in which case it may be bent curved, for example, with relatively short radius of curvature.

In an advantageous application of the invention the film has particles conducting electricity in the direction of thickness of the film next to each other in random order. Thus a film manufacturable in such a relatively simply way, functions in a functional way as transversally conducting medium between conducting surface layers of the electret transducer and the electret material. In addition, particles in this kind of film are in direct contact with the electret film, in which case condensator construction similar to previous electret transducers cannot be formed.

In an advantageous application of the invention the film transversally conducting electricity is made of polymer and the particles conducting electricity in the film are nickel particles coated with silver. A transversally conducting film manufactured in this way is an earlier recognized product commercially available and therefore economical by purchasing price as well as easy and simple to be placed between the conducting surface layer and the electret material. The nickel particles coated with silver posses a small specific resistance thus conducting electricity very well, although their cross-sectional surface area is extremely small. In addition, the polymer being the material of the film is an extremely good insulator, thus allowing the nickel particles coated with silver to be advantageously very close to each other without enabling the formation of longitudinal electrical contacts. Therefore, in this kind of electret transducer it is possible to create a great density of conducting points in the direction of thickness in which case it is possible to measure it advantageously, for example, a local stress affecting on a very small surface area.

In an advantageous application of the invention the connecting elements of the transducer are conducting wires connected to the surface layers. In this way the electret transducer in accordance with the invention may be connected simply as desired to any suitable measuring apparatus.

Next, the invention will be explained in more detail with reference to the accompanying drawing, in which the principle of the electret transducer in accordance with the invention is illustrated, viewed from side.

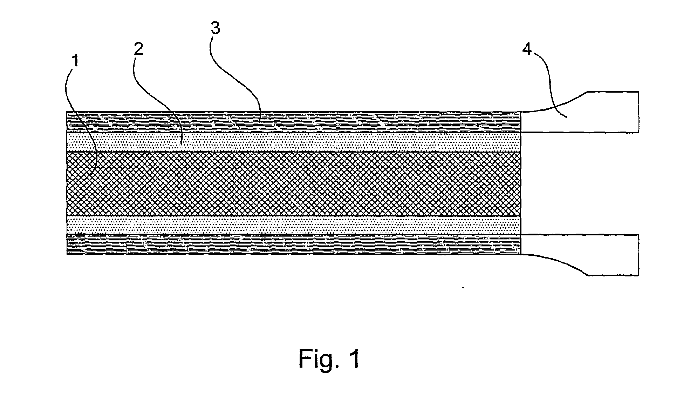

The electret transducer in accordance with figure 1 includes a film-like object 1 made of electret material, transversally conducting film 2 of the same size as the electret film attached to the upper and the lower surface of the said film-like object 1, as well as films 3 made of conducting material and attached to the upper surface of the transversally conducting film and to the lower surface of the lower transversally conducting film. In addition, the electret transducer in accordance with figure 1 includes connecting elements 4, attached to conducting films in order to connect the conducting wires to the conducting films.

The electret film 1 is, in the application in accordance with figure 1, an electret film of suitable thickness and size made with a recognized method of special polymer.

Due to its construction the material has been made permanently electrically polarized thus having a permanent inner electric field. The magnitude of the electric field depends on the state of transformation of the electret material, such that the transformation directed to it creates a potential and current on the surfaces of the electret material.

The transversally conducting film 2 in the application in accordance with figure 1 is made of earlier recognized transversally conducting two-sided tape made of acrylic polymer, which two sides with adhesive surface have protecting papers treated with silicon to be removed in mounting. The transversally conducting film is located between the adhesive surfaces. It has alloyed nickel particles coated with silver reaching through the film for conducting in the direction of thickness of the film. The adhesive surfaces on the film surfaces are so thin that while joining the film the zinc particles coated with silver reach through the adhesive layer such connecting the electret film 1 to conducting films 3 attached to outer surfaces of the transversally conducting films. Thus the charge being formed on surfaces of the electret film may be transferred to conducting films.

The conducting films 3 refer, in this application, to metal films attached to the upper surface of the upper transversally conducting film and to the lower surface of the lower transversally conducting film. They are of the same size as the other films except in the application in accordance with figure 1 they include connecting elements 4 reaching outside the electret film and the transversally conducting film in accordance with figure 1. The conducting wires to be connected to the transducer may be attached to them, for example, by means of adhesive conducting electricity, by soldering or by other suitable means for connecting wires. On the metal films there may be, depending on the application of usage, some suitable insulation layer, such as insulation varnish, polymer cover or some other suitable coating for preventing outer contacts.

The electret transducer in accordance with figure 1 may be manufactured of a transversally conducting tape, an electret film and an aluminium film relatively simply for example as follows: cut a piece of the size of an electret transducer of desired size from an electret film plate and two pieces of the same size as the former pieces of transversally conducting tape and metal film. Remove the protecting paper from one side from the transversally conducting tapes. After that glue the transversally conducting films to the both sides of the electret film. After this remove the other protecting papers of the transversally conducting films and glue the aluminium films on them, thus placing them on both sides of the electret transducer in accordance with figure 1. After joining, secure the attachment of the connections by letting the transducer dry, for example, in a suitable press in accordance with the joining instruction of the tape. At the end attach conducting wires to the connecting elements of the metal films, for example, with electroconductive epoxy resin or with some other corresponding manner.

The electret transducer in accordance with the invention is suitable for employing in many various applications. For example, while employing as a stressing transducer it is connected to a suitable measuring device measuring potential and attached to a suitable location in the object to be measured such that the stress directed to the object creates a transformation to the transducer, in which case the transducer creates a potential proportional to the transformation directed to it. The magnitude of the stress may be defined at the moment of stressing or later on the grounds of mechanical properties of the transducer and the object from stored measuring data. The stress or the transformation measured with the electret transducer in accordance with the invention may be static or dynamic by nature and typically, for example, bending or pressing.

The size of the electret transducer and the construction of films included in it in accordance with the invention may vary relatively freely. Usually, the surface area of an electret transducer is relatively large in respect of its thickness, but if desired, an electret transducer may be manufactured also small by surface area. As electret film whatever today recognized electret film, which acts as earlier described, may be employed. The thickness of the film is advantageously app. 10-60 µm, but it may also differ from this. The transversally conducting film must be of material conducting electricity as efficiently as possible in the direction of thickness of the film, but the resistance of which in cross-sectional direction is as great as possible. Thus, as film, other transversally conducting film which may be attached to other parts of the transducer by other means, may be employed than the earlier said transversally conducting electricity two-sided tape. Films made of whatever suitable conducting material, such as copper, silver or various metal alloys may act as conducting films of surface layer or instead of those, for example, electroconducting metal coating formed on the transversal film by coating with metal or by vacuum vaporizing. In the transducer there may be various connecting elements for connecting wires or wires may be glued with electroconducting adhesive directly on the outer surfaces of the conducting films. If desired, the electret transducer in accordance with the invention may also be, for example, encased or manufactured in other parts suitable for a certain special application.

The invention is not limited to the presented advantageous application but it can vary within the scope of the invention as defined in the appended claims.

## Claims

1. An electret transducer, which has surface layers (3) made of conducting material, between which layers there is electret material (1) and which surface layers include connecting elements (4) for connecting the transducer to a measuring apparatus, **characterized in that** between the electret material (1) and both surface layers (3) have been placed transversally conducting electricity films (2), which have particles conducting electricity in the direction of thickness of the film.

2. An electret transducer in accordance with claim 1, **characterized in that** the layers of the transducer (1, 2, 3) are film-like objects attached against each other.

3. An electret transducer in accordance with claim 1 , **characterized in that** the transversally conducting electricity film (2) is of polymer, and that the particles conducting electricity in the film are nickel particles coated with silver.

4. An electret transducer in accordance with any of claims 1-3 , **characterized in that** conducting wires connected to the surface layers act as connecting elements (4) of the transducer.

## Patentansprüche

1. Ein Elektretwandler mit Oberflächenschichten (3) aus leitfähigem Material, zwischen den Schichten befindet sich Elektret (1), die Oberflächenschichten enthalten Verbindungselemente (4) zum Anschluss des Wandlers an ein Messgerät, **dadurch gekennzeichnet, dass** zwischen dem Elektret (1) und den beiden Oberflächenschichten (3) transversal Strom leitende Folien (2) platziert sind, die Partikel aufweisen, die Strom in Richtung der Foliendicke leiten.

2. Ein Elektretwandler gemäß Anspruch 1, **dadurch gekennzeichnet , dass** es sich bei den Schichten des Wandlers (1, 2, 3) um folienähnliche Objekte handelt, die aneinander befestigt sind.

3. Ein Elektretwandler gemäß Anspruch 1, **dadurch gekennzeichnet, dass** die transversal Strom leitenden Folien (2) aus Polymer besteht und die Strom leitenden Partikel in den Folien aus silberbeschichtetem Nickel bestehen.

4. Ein Elektretwandler gemäß den Ansprüchen 1-3, **dadurch gekennzeichnet , dass** stromführende Kabel, die mit der Oberflächenschicht verbunden sind, als Verbindungselemente (4) zum Wandler fungieren.

## Revendications

1. Un transducteur à électret comportant des couches de surface (3) en matériau conducteur, renfermant un matériau électret (1), ces couches de surface comprenant des éléments de connexion (4) pour connecter le transducteur à un dispositif de mesure, **caractérisé en ce que** entre l'électret (1) et les deux couches de surface (3) ont été placés des films de conduction transversale (2) qui ont des particules conduisant l'électricité dans le sens de l'épaisseur du film.

2. Un transducteur à électret selon la revendication 1, **caractérisé en ce que** les couches du transducteur (1,2,3) sont des objets assimilables à des films attachés l'un par rapport à l'autre.

3. Un transducteur à électret selon la revendication 1, **caractérisé en ce que** le film de conduction transversale (2) est en polymère et que les particules conductrices d'électricité présentes dans le film sont des particules de nickel revêtues d'argent.

4. Un transducteur à électret selon n'importe laquelle des revendications 1 à 3, **caractérisé par le fait que** des fils conducteurs connectés aux couches de surface agissent comme éléments (4) de connexion du transducteur.
